# EUROPEAN PATENT APPLICATION

(11) **EP 4 215 573 A1**
(43) Date of publication of application: **26.07.2023**
(21) Application number: 22152418.4
(22) Date of filing: 20.01.2022
(51) Int. Cl.: C08K 3/04, C08K 3/36, C08K 9/06, C08L 69/00

(54) **METHOD OF ADJUSTING ELECTRICAL PROPERTIES BY SILICA IN THERMOPLASTIC COMPOSITIONS AND USES THEREOF**

(71) Applicant: SHPP Global Technologies B.V., 4612 PX Bergen op Zoom (NL)
(72) Inventor: GUO, Mingcheng, Shanghai (CN); ZHANG, Shen, Shanghai (CN)
(74) Representative: Dehns

(57) **Abstract**

Disclosed herein are compositions comprising: from about 30 wt. % to 90 wt. % of polymer component; and from about 1 wt. % to 25 wt. % of a filler component, wherein the filler component comprises from about 5 wt% to about 20 wt% of an electrically conductive filler and from about 0. lwt% to about 5wt% of a non-electrically conductive filler based on the total volume of the composition, wherein the non-electrically conductive filler is intrinsically hydrophobic or wherein the non-electrically conductive filler comprises a hydrophobic coating; wherein the composition exhibits a surface resistivity of from about 1 × 10⁵ Ohm/square to about 1 × 10⁸ Ohm/square when tested in accordance with ASTM D257, wherein the combined weight percent value of all components does not exceed 100 wt. %, and all weight percent values are based on the total weight of the composition.

## Description

### FIELD OF THE DISCLOSURE

The present disclosure relates to methods of altering electrical conductivity of filled electrically conductive materials.

### BACKGROUND OF THE DISCLOSURE

Conductive materials require different levels of surface resistivity based on different application requirements. The conductive network of filled conductive thermoplastics materials must be effectively maintained to ensure the conductivity of the materials. In general, as the concentration of conductive filler such as carbon black increases, a thermoplastic composition may transition from insulating to conducting. Conductivity however may shift dramatically across a narrow loading of carbon black concentration. In forming materials comprising these conventionally filled compositions, it becomes difficult to control the carbon black concentration in such a narrow loading range to achieve the desired conductivity/surface resistivities. The proper size of the non-conductive particle is required to block the conductive paths of carbon black aggregates in a resin matrix. Otherwise, the carbon black and the non-conductive particle networks may be independently dispersed in the thermoplastic matrix, which may fail to prevent electron transfer or tailor the electrical conductivity in percolation threshold. Thus there remains a need in the art for a method of tempering the percolation threshold of a carbon-filled polymer composition.

Aspects of the present disclosure addresses these and other needs.

### SUMMARY

The above-described and other deficiencies of the art are met by thermoplastic compositions comprising from about 30 wt. % to 90 wt. % of polymer component; and from about 1 wt. % to 25 wt. % of a filler component, wherein the filler component comprises from about 5 wt% to about 20 wt% of an electrically conductive filler and from about 0.1 wt% to about 5wt% of a non-electrically conductive filler based on the total volume of the composition wherein the combined weight percent value of all components does not exceed 100 wt. %, and all weight percent values are based on the total weight of the composition., wherein the non-electrically conductive filler is intrinsically hydrophobic or wherein the non-electrically conductive filler comprises a hydrophobic coating. The composition may exhibit a surface resistivity of from about 1 × 10⁵ Ohm/square to about 1 × 10⁸ Ohm/square when tested in accordance with ASTM D257.

The above described and other features are exemplified by the following detailed description, examples, and claims.

### BRIEF DESCRIPTION OF THE FIGURES

The accompanying figures, which are incorporated in and constitute a part of this specification, illustrate several aspects and together with the description serve to explain the principles of the disclosure.
FIG. 1 is a graphical representation of the log conductivity as a function of conductive carbon black concentration in a polymer composition.
FIG. 2 is a schematic diagram of conductive carbon black conductivity path without (left) and with (middle) fumed silica, and the resultant broadened percolation curve (right and dashed curve).
FIG. 3 presents Table 3 showing the physical properties and surface resistivity of compounds with different loading of conductive carbon black.
FIG. 4 presents Table 4 showing the physical properties and surface resistivity of compounds with different loading conductive carbon blacks adjusted by silica.
FIG. 5 is a graphical representation of the surface resistivity as a function of the conductive carbon black loading for 0.07 mm films and 3.0 mm plaques both with and without silica.

### DETAILED DESCRIPTION

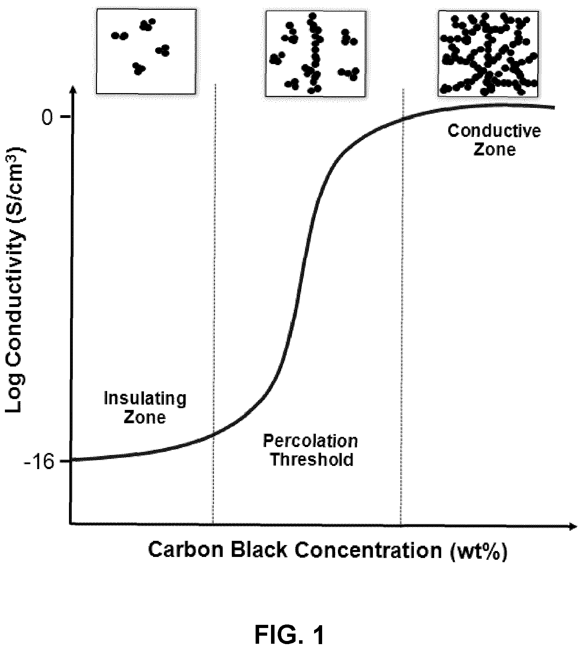

Polymeric materials requiring higher levels of conductivity generally require a higher loading of conductive filler, while materials configured for less conductivity requirements need a lower filler loading. As the content of conductive filler is increased, the filled composition transitions from insulating (characterized as a conductivity less than 1 × 10⁹ S/cm and surface resistivity greater than 1 × 10¹³ Ω) to conducting (characterized as a conductivity greater than 1 × 10⁻⁴ S/cm and surface resistivity less 1 × 10⁷ Ω). As shown in FIG. 1, a plot of the log conductivity as a function of conductive carbon black concentration is an S-shaped percolation curve. See, Paul J. Brigandi, Jeffrey M. Cogen, Raymond A. Pearson. Electrically conductive multiphase polymer blend carbon-based composites. Polymer engineering and science, 2014, volume 54, issue 1, page 1-16. https://www.researchgate.net/publication/262993720_Electrically_Conductive_Multiphase_P olymer_Blend_Carbon-Based_Composites/link/5ald6b7fa6fdcc0af326d96a/download

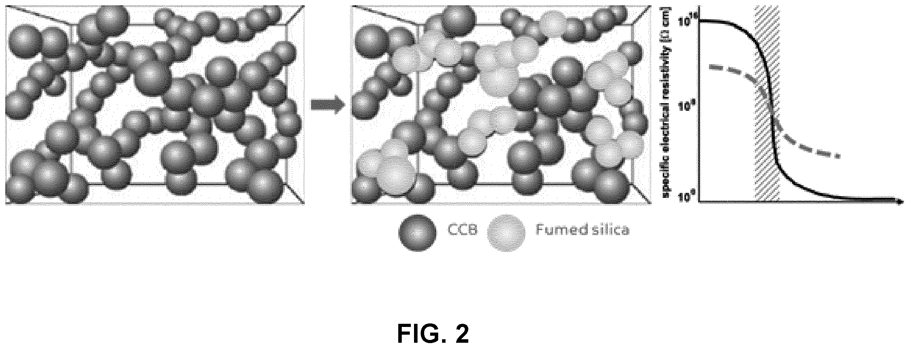

A sharp change in conductivity is observed in the percolation threshold which demonstrates an abrupt change in conductivity at critical carbon black concentration. In manufacturing processes, such as compounding, it becomes difficult to control the carbon black concentration in such a narrow loading range to achieve a desired conductivity or surface resistivity. Within this range, a small increase in loading results in a drastic increase in conductivity and vice versa. Conventional approaches have attempted the incorporation of a non-conductive particle to alter the conductive path of carbon black. A particular size of the non-conductive particle (gray) is required to block the conductive paths of the carbon black aggregates (dark gray) as shown in FIG. 2.

Without particular properties of the non-conductive filler, the resulting carbon black and the non-conductive particle networks may be independently dispersed in the thermoplastic matrix. Independent dispersion of the carbon black and non-conductive filler may however fail to prevent electron transfer and thus does not allow for manipulation of the electrical conductivity in percolation threshold.

US Patent No. 9,267,048B2 discloses a conductive composition including a dual phase filler comprising carbon black and silica. US Patent Publication 20170154702A1 discloses a conductive composite comprising a polymer, conductive filler, and a non-conductive filler. US Patent Publication 20080015284A1 discloses a conductive polymeric composition comprising a polymer, a conductive filler, and a non-conductive filler. US Patent Publication 20160090469A1 discloses a polymer composite material comprising a microadditive (namely carbon black) and a spherical nanoadditive, which may be silica or aluminum oxide nanoparticles. The references however do not address hydrophobicity of the silica filler nor the effect on electrostatic properties.

Aspects of the present disclosure enable significant extension of the percolation threshold such that conductivity of the compound can decrease slower with adjustments in the amount of carbon filler present. Compositions of the present disclosure combine a polymer matrix, electrically conductive filler, and hydrophobic non-electrically conductive filler to manipulate or adjust the electrically conductivity obtained for the composition.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, for example, combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

### Thermoplastic Composition

Aspects of the disclosure relate to a composition comprising thermoplastic composition comprising a polymer component and a filler component. The thermoplastic polymer component may comprise a polycarbonate, a polystyrene, or a combination thereof.

In certain aspects, the composition enables manipulation of surface resistivity across a greater percolation threshold where carbon filler is used. As a further aspect, the composition may exhibit 1 × 10⁵ Ohm/square to about 1 × 10⁸ Ohm/square when tested in accordance with ASTM D257.

Further disclosed is a component packaging materials for electronic products, including microchips, printed circuit board, modules, assemblies, wiring boards and associated components.

### Polymer Component

In an aspect, the composition may comprise a polymer component which may be considered a polymer base resin as other polymers may be present in the composition. In some aspects, the polymer component may comprise a polycarbonate polymer, a polystyrene polymer or a combination thereof. In specific examples, the polymer component comprises a bisphenol A polycarbonate.

In further aspects, the thermoplastic resin may comprise a polycarbonate polymer. As used herein, "polycarbonate" refers to an oligomer or polymer comprising residues of one or more dihydroxy compounds, for example, dihydroxy aromatic compounds, joined by carbonate linkages; it also encompasses homopolycarbonates, copolycarbonates, and (co)polyester carbonates. The terms "residues" and "structural units", used in reference to the constituents of the polymers, are synonymous throughout the specification. In various aspects, the polycarbonate may comprise a bisphenol A based polycarbonate.

The terms "BisA," "BPA," or "bisphenol A," which can be used interchangeably, as used herein refers to a compound having a structure represented by the formula: 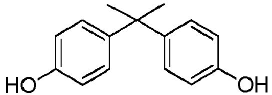 BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

In certain aspects, the polycarbonate polymer is a Bisphenol-A polycarbonate, a high molecular weight (Mw) high flow/ductile (HFD) polycarbonate, a low Mw HFD polycarbonate, or a combination thereof. For example, the high flow/ductile polycarbonate may be a polycarbonate that provides very high flow (for example, about 40% greater than conventional polycarbonate), while maintaining the toughness and ductility for flowability that is typical in conventional polycarbonate. Examples of high flow/ductile polycarbonates suitable for use in aspects of the present disclosure include the LEXAN^{™} HFD line of polycarbonates, available from SABIC. For a given melt flow, LEXAN^{™} HFD polymer has about a 10-15 °C lower ductile/brittle transition temperature than conventional polycarbonate (PC). In addition, LEXAN^{™} HFD polymer exhibits high ductility at temperatures down to about -40 °F (-40 °C), and processes at temperatures about 20 °F (20 °C) lower than conventional PC having the same ductility.

An example of a bisphenol-A polycarbonate suitable for use in aspects of the disclosure includes, but is not limited to, a PC copolymer (various grades of which are available from SABIC), which includes repeating units derived from BPA and repeating units derived from sebacic acid. In a further aspect, the polycarbonate polymer could be a Bisphenol-A polycarbonate homopolymer, or a blend of the PC Copolymer and the Bisphenol-A polycarbonate homopolymer.

More specifically, a suitable polycarbonate copolymer may comprise repeating units derived from sebacic acid and BPA. Useful polycarbonate copolymers are commercially available and include, but are not limited to, those marketed under the trade names LEXAN^{™} EXL and LEXAN^{™} HFD polymers available from SABIC. The mechanism for the sebacic acid-based may proceed as shown below.

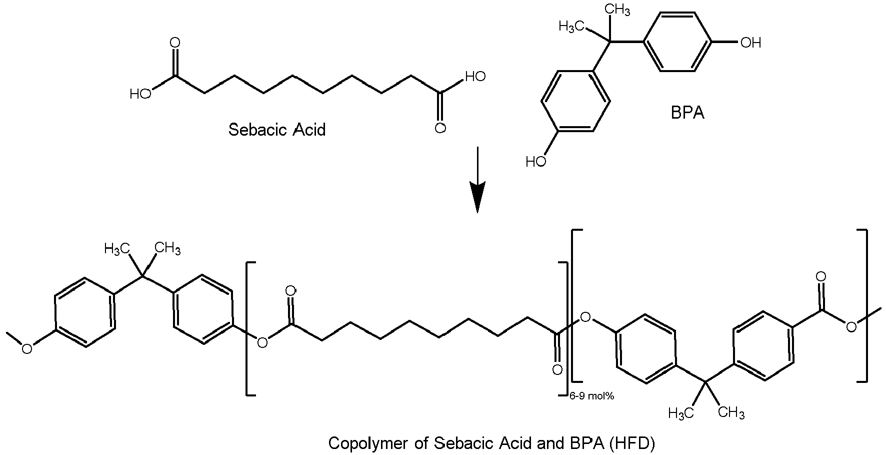

The sebacic acid based PC may provide improved flow and ductility as well as lower processing times while the BPA provides desirable heat performance and modulus properties to provide a copolymer of sebacic acid and BPA. An example of the sebacic acid PC may comprise LEXAN^{™} HFD polymer available from SABIC. The polymer component thus may comprise a poly(aliphatic ester)-polycarbonate copolymer comprising soft block aliphatic dicarboxylic acid ester units.

As used herein, "high molecular weight" refers to a molecular weight (Mw) of about 58,000 to about 75,000 grams/mole. As used herein, "low molecular weight" refers to a Mw of about 15,000 to about 58,000 grams/mole, as measured by gel permeation chromatography using BPA polycarbonate standards.

In aspects of the disclosure the thermally conductive composition includes from about 20 wt. % to about 80 wt. % a polycarbonate polymer. In particular aspects the thermally conductive composition includes from about 25 wt. % to about 70 wt. % of a polycarbonate polymer, and in further aspects the thermally conductive composition includes from about 35 wt. % to about 65 wt. % a polycarbonate polymer, or even from about 35 wt. % to about 50 wt. % a polycarbonate polymer.

In various further aspects, "polycarbonates" and "polycarbonate resins" as used herein further include homopolycarbonates, copolymers including different R¹ moieties in the carbonate (referred to herein as "copolycarbonates"), copolymers including carbonate units and other types of polymer units, such as ester units, polysiloxane units, and combinations including at least one of homopolycarbonates and copolycarbonates. As used herein, "combination" is inclusive of blends, mixtures, alloys, reaction products, and the like.

Certain aspects of the composition include from about 50 wt. % to about 97 wt. % of a polymer component, or from about 40 wt. % to about 97 wt. % of a polymer base resin, or from about 55 wt. % to about 97 wt. % of a polymer base resin, or from about 60 wt. % to about 97 wt. % of a polymer base resin, or from about 70 wt. % to about 97 wt. % of a polymer base resin, or from about 40 wt. % to about 95 wt. % of a polymer base resin, or from about 55 wt. % to about 95 wt. % of a polymer base resin, or from about 60 wt. % to about 95 wt. % of a polymer base resin, or from about 75 wt. % to about 97 wt. % of a polymer base resin.

### Electrically Conductive Filler

Compositions disclosed herein may comprise an electrically conductive filler. Suitable electrically conductive fillers may include carbon-based or non carbon-based fillers such as particulate interstitial carbides, and metallic nanoparticles (gold, silver, copper, Fe₂O₃, etc.). In various aspects, the composition comprises an electrically conductive carbon based filler such as conductive carbon black. Generally, carbon-based fillers may comprise carbon fibers, carbon powder, graphite, graphene, carbon platelets, or carbon nanotubes. As such, the composition may be free of or substantially free of nano carbon, or nanocarbon fiber.

In various examples, the conductive carbon black is an electrically conductive carbon black. Carbon black may refer to an amorphous form of carbon with a high surface-area-to-volume ratio. Further, carbon black may include a chemisorbed oxygen complex (such as, carboxylic, quinonic, lactonic, phenolic groups and the like) on its surface to varying degrees, depending on the conditions of manufacture. Carbon black properties such as particle size, structure, and purity may vary depending on the type of carbon black chosen. In one aspect, carbon black can disperse well within the polymer phase, maintain the integrity of its structure or network, and have a consistent particle size. According to certain aspects of the present disclosure, however, the conductive carbon black does not refer to carbon black for colorant purposes.

The conductive carbon black may be furnace black or acetylene black or an extra conductive carbon black. Conductive carbon black such as furnace black or acetylene black may have a high-volume resistivity within a range of from 1 to 10² Ω-cm. Useful conductive carbon black of the present disclosure may exhibit a BET (Brunauer, Emmett and Teller) specific surface area of about at least 50 meters squared per gram (m²/g) to about 1000 m²/g.

In another aspect, the conductive carbon black powder may exhibit an oil absorption number (OAN) from about at least 100 milliliters (ml)/100 gram (g) or at least 150 ml/100g. In a specific aspect, the electrically conductive carbon black comprises an ENSACO^{™} 250 G carbon powder, available from Earache Europe or Imerys Graphite & Carbon Switzerland. In some aspects, the thermoplastic composition may comprise an electrically conductive carbon black having at least one dimension of a particular size. The electrically conductive carbon black may comprise a powder having a particular particle size distribution. For example, the carbon-based filler may have at least one dimension that is less than 100 nm. However, these particles may agglomerate together to have a certain structure and increased aggregate dimensions that may be at a micrometer scale in size. In some aspects, the electrically conductive carbon black may have a particular diameter. For example, the electrically conductive carbon black may have a primary particle diameter of 10 nanometers to 50 nm. In further examples, the conductive carbon black may have a primary particle size (or particle diameter) of from about 20 nm to 50 nm.

The electrically conductive filler may comprise a highly structured carbon black. Highly structured carbon black may provide higher viscosity, greater electrical conductivity and easier dispersion. Measures of aggregate structure may be obtained from shape distributions from scanning electron microscopy (SEM) analysis and oil absorption number (OAN). OAN is a measure of the ability of a carbon black to absorb liquids. It's the number of cubic centimeters of dibutyl phthalate (DBP) or paraffin oil absorbed by 100 g of carbon black under specified conditions. The OAN value is proportional to the degree of aggregation of structure level of the carbon black. Test Methods follow ASTM D 2414 and D 3493. OAN values less than 100 ml/100g, may be considered low structure and are typical of carbon black for black colorant, reinforcing additives, or UV absorption. OAN values from 100 to 140 ml/100g may be considered medium level structured carbon black and are mainly used for wire and cable insulation shield and ESD (Electro static discharge) applications. OAN values greater than 140 ml/100g may be considered a high structure, while OAN values greater than 280 ml/100g may be extra or super high level structured carbon black, and may be useful for ESD, radar absorption and EMI (Electromagnetic interference) shielding. In certain aspects, the disclosed composition may comprise a highly structured carbon black having an OAN value of at least 140 ml/100 g when tested in accordance with ASTM D 2414 and/or D 3493.

In a yet further aspect, the electrically conductive carbon black may have a DBP absorption amount from about 80 milliliters per 100 grams (ml/100g) to about 500 ml/100 g.

In some aspects, the composition can comprise from about 5 wt. % to about 20 wt. % of an electrically conductive carbon black based on the total weight of the thermoplastic composition. The ratio of the polymer component to electrically conductive carbon black may be from about 32:1 to about 4:1 or from about 24:1 to about 6:1. In further aspects the composition may include from about 0.5 wt. % to about 25 wt. %, or from about 0.5 wt. % to about 20 wt. %, or from about 1 wt. % to about 20 wt. %, or from about 3 wt. % to about 30 wt. %, or from about 2 wt. % to about 25 wt. % of an electrically conductive carbon black, or from about 10 wt. % to about 25 wt. % of an electrically conductive carbon black or from about 8 wt. % to about 25 wt. % of an electrically conductive carbon black.

### Non-electrically Conductive Filler

The disclosed thermoplastic composition may a non-electrically conductive filler. The non-electrically conductive filler may be intrinsically hydrophobic or may comprise a hydrophobic coating.

The non-electrically conductive filler may comprise a number of suitable materials that exhibit a conductivity of less than 1 × 10⁻² s/m measured at a temperature of 20 °C when tested in accordance with ASTM D257. Moreover, these materials are suitable with the caveat that the non-electrically conductive filler is either intrinsically hydrophobic (or inert) or comprises a hydrophobic coating.

Intrinsically hydrophobic may refer to a molecule or compound that is non-polar. Intrinsically hydrophobic may also describe a lack of reactive surface chemistry.

The hydrophobic coating may comprise a polymer that lacks reactive surface chemistry. In certain examples, the non-electrically conductive filler may comprise a hydrophobic coating thereon. For example, the non-electrically conductive filler may comprise a fumed silica having a hydrophobic coating. Here, an untreated (or uncoated) fumed silica may have a hydrophilic surface. The hydrophilic surface may contain polar silanol groups, which tend to agglomerate together and can lead to hardening over time (commonly called crepe hardening). Untreated fumed silica may exhibit strong water absorption given these groups. It may be difficult to be wetted and dispersed in a given organic polymer phase. As such, a hydrophobic coating according to aspects of the present disclosure may be applied at the untreated fumed silica. In a specific example, the fumed silica may be treated with an alkylsilane coating.

The hydrophobic coating may comprise a number of inert or non-polar surface treatment agents. Alkylsilane is a commonly used surface treatment agent to make the surface hydrophobic, which can be added during in-situ treatment or as pre-treatment to the non-electrically conductive filler, such as fumed silica, prior to incorporation in the polymer composition. In various aspects, further hydrophobic coating surface treatments may include a dimethyl silicone fluid, PDMS (polydimethylsiloxane), HMDS (hexamethyldisilazane) or DDS (dimethyldichlorosilane). Other coatings may include fatty acid metal soap, paraffin, polyolefin, and fluorocarbon polymer. The hydrophobic coating may be present in an amount of less than 1 wt. % based on the total weight of the non-electrically conductive filler.

The non-electrically conductive filler may comprise calcium carbonate, zinc sulfide, barium sulfide, aluminum oxide, fumed silica or a combination thereof. The foregoing fillers are generally considered hydrophilic, and as such, become hydrophobic with a hydrophobic coating applied thereto. In a specific example, the non-electrically conductive filler comprises a fumed silica having a hydrophobic surface treatment or coating thereupon.

In some aspects, the non-electrically conductive filler may have a particular diameter or primary particle size. For example, the non-electrically conductive filler may have a primary particle size or diameter of less than 50 nm or less than 20 nm. These dimensions may refer to the non-electrically conductive filler inclusive of any coating or surface treatment. In certain aspects, the non-electrically conductive filler may have a particle size that is at least 10 % less than the particle size of the electrically conductive filler.

As provided herein, the disclosed composition may comprise from about 1 wt. % to about 15 wt. % of a filler component. The filler component may comprise from about 5 wt% to about 20 wt% of an electrically conductive filler and from about 0.1wt% to about 5wt% of a non-electrically conductive filler based on the total weight of the composition.

### Non-Polar Polymer

The disclosed thermoplastic composition may comprise a non-polar polymer resin, particularly as a masterbatch resin. A non-polar polymer of the present disclosure may comprise a polyethylene, an ethylene-propylene copolymer, an ethylene-based olefin copolymer, or a combination thereof. In specific examples, the dispersing agent may comprise a polyethylene (PE), including high-density polyethylene (HDPE), linear low-density polyethylene (LLDPE), low-density polyethylene (LDPE), mid-density polyethylene (MDPE), glycidyl methacrylate modified polyethylene, a maleic anhydride functionalized polyethylene, an ethylene propylene rubber (such as an ethylene-propylene-diene monomer rubber EPDM), or a combination thereof. In a specific example, the dispersing agent comprises a polyethylene such as HDPE.

### Additional Additives

In certain aspects. conventionally used in the manufacture of molded thermoplastic parts with the proviso that the optional additives do not adversely affect the desired properties of the resulting composition. Mixtures of optional additives can also be used. Such additives can be mixed at a suitable time during the mixing of the components for forming the composition mixture. Exemplary additives can include ultraviolet agents, ultraviolet stabilizers, heat stabilizers, antistatic agents, anti-microbial agents, anti-drip agents, radiation stabilizers, pigments, dyes, fibers, fillers, plasticizers, fibers, flame retardants, antioxidants, lubricants, wood, glass, and metals, and combinations thereof. According to certain aspects, the polymer compositions may maintain mechanical performance and dielectric strength even with high levels of fillers (for example, greater than 30 wt. % filler based on the total weight of the polymer composition).

The composition disclosed herein can comprise one or more additional fillers. The filler can be selected to impart additional impact strength and/or provide additional characteristics that can be based on the final selected characteristics of the polymer composition. In some aspects, the filler(s) can comprise inorganic materials which can include clay, titanium oxide, asbestos fibers, silicates and silica powders, boron powders, calcium carbonates, talc, kaolin, sulfides, barium compounds, metals and metal oxides, wollastonite, glass spheres, glass fibers, flaked fillers, fibrous fillers, natural fillers and reinforcements, and reinforcing organic fibrous fillers. In certain aspects, the composition may comprise a glass fiber filler. For example, the composition may comprise from about 0.01 wt. % to about 25 wt. %, from about 10 wt. % to about 25 wt. %, from about 15 wt. % to about 25 wt. %, of a glass fiber filler based on the total weight of the composition. In yet further aspects, the composition may be free or substantially free of a glass filler.

Appropriate fillers or reinforcing agents can include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, titanium dioxide, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents can be coated or surface treated, with silanes for example, to improve adhesion and dispersion with the polymer matrix. Fillers generally can be used in amounts of 1 to 200 parts by weight, based on 100 parts by weight of based on 100 parts by weight of the total composition.

In some aspects, the thermoplastic composition may comprise a synergist. In various examples fillers may serve as flame retardant synergists. The synergist facilitates an improvement in the flame retardant properties when added to the flame retardant composition over a comparative composition that contains all of the same ingredients in the same quantities except for the synergist. Examples of mineral fillers that may serve as synergists are mica, talc, calcium carbonate, dolomite, wollastonite, barium sulfate, silica, kaolin, feldspar, barytes, or the like, or a combination comprising at least one of the foregoing mineral fillers. Metal synergists, e.g., antimony oxide, can also be used with the flame retardant. In one example, the synergist may comprise magnesium hydroxide and phosphoric acid. The mineral filler may have an average particle size of about 0.1 to about 20 micrometers, specifically about 0.5 to about 10 micrometers, and more specifically about 1 to about 3 micrometers.

The thermoplastic composition can comprise an antioxidant. The antioxidants can include either a primary or a secondary antioxidant. For example, antioxidants can include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations including at least one of the foregoing antioxidants. Antioxidants can generally be used in amounts of from 0.01 to 0.5 parts by weight, based on 100 parts by weight of the total composition, excluding any filler.

In various aspects, the thermoplastic composition can comprise a mold release agent. Exemplary mold releasing agents can include for example, metal stearate, stearyl stearate, pentaerythritol tetrastearate, beeswax, montan wax, paraffin wax, or the like, or combinations including at least one of the foregoing mold release agents. Mold releasing agents are generally used in amounts of from about 0.1 to about 1.0 parts by weight, based on 100 parts by weight of the total composition, excluding any filler.

In an aspect, the thermoplastic composition can comprise a heat stabilizer. As an example, heat stabilizers can include, for example, organo-phosphites such as triphenyl phosphite, tris-(2,6-dimethylphenyl)phosphite, tris-(mixed mono-and dinonylphenyl)phosphite or the like; phosphonates such as dimethylbenzene phosphonate or the like, phosphates such as trimethyl phosphate, or the like, or combinations including at least one of the foregoing heat stabilizers. Heat stabilizers can generally be used in amounts of from 0.01 to 0.5 parts by weight based on 100 parts by weight of the total composition, excluding any filler.

In further aspects, light stabilizers can be present in the thermoplastic composition. Exemplary light stabilizers can include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone or the like or combinations including at least one of the foregoing light stabilizers. Light stabilizers can generally be used in amounts of from about 0.1 to about 1.0 parts by weight, based on 100 parts by weight of the total composition, excluding any filler. The thermoplastic composition can also comprise plasticizers. For example, plasticizers can include phthalic acid esters such as dioctyl-4,5-epoxy-hexahydrophthalate, tris-(octoxycarbonylethyl) isocyanurate, tristearin, epoxidized soybean oil or the like, or combinations including at least one of the foregoing plasticizers. Plasticizers are generally used in amounts of from about 0.5 to about 3.0 parts by weight, based on 100 parts by weight of the total composition, excluding any filler.

Ultraviolet (UV) absorbers can also be present in the disclosed thermoplastic composition. Exemplary ultraviolet absorbers can include for example, hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB^{™} 5411); 2-hydroxy-4-n-octyloxybenzophenone (CYASORB^{™} 531); 2-[4,6-bis(2,4-dimethylphenyl)-1,3,5-triazin-2-yl]- 5-(octyloxy)-phenol (CYASORB^{™} 1164); 2,2'-(1,4- phenylene)bis(4H-3,1-benzoxazin-4-one) (CYASORB^{™} UV- 3638); 1,3-bis[(2-cyano-3,3-diphenylacryloyl)oxy]-2,2-bis[[(2-cyano-3, 3-diphenylacryloyl)oxy]methyl]propane (UVINUL^{™} 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; nano-size inorganic materials such as titanium oxide, cerium oxide, and zinc oxide, all with particle size less than 100 nanometers; or the like, or combinations including at least one of the foregoing UV absorbers. UV absorbers are generally used in amounts of from 0.01 to 3.0 parts by weight, based on 100 parts by weight of the total composition, excluding any filler.

The thermoplastic composition can further comprise a lubricant. As an example, lubricants can include for example, fatty acid esters such as alkyl stearyl esters, e.g., methyl stearate or the like; mixtures of methyl stearate and hydrophilic and hydrophobic surfactants including polyethylene glycol polymers, polypropylene glycol polymers, and copolymers thereof e.g., methyl stearate and polyethylene-polypropylene glycol copolymers in a suitable solvent; or combinations including at least one of the foregoing lubricants. Lubricants can generally be used in amounts of from about 0.1 to about 5 parts by weight, based on 100 parts by weight of the total composition, excluding any filler.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. In one example, TSAN can comprise 50 wt. % PTFE and 50 wt. % SAN, based on the total weight of the encapsulated fluoropolymer. The SAN can comprise, for example, 75 wt. % styrene and 25 wt. % acrylonitrile based on the total weight of the copolymer. An antidrip agent, such as TSAN, can be used in amounts of 0.1 to 10 parts by weight, based on 100 parts by weight of the total composition, excluding any filler.

As an example, the disclosed composition can comprise an impact modifier. The impact modifier can be a chemically reactive impact modifier. By definition, a chemically reactive impact modifier can have at least one reactive group such that when the impact modifier is added to a polymer composition, the impact properties of the composition (expressed in the values of the Izod impact) are improved. In some examples, the chemically reactive impact modifier can be an ethylene copolymer with reactive functional groups selected from, but not limited to, anhydride, carboxyl, hydroxyl, and epoxy.

In further aspects of the present disclosure, the composition can comprise a rubbery impact modifier. The rubber impact modifier can be a polymeric material which, at room temperature, is capable of recovering substantially in shape and size after removal of a force. However, the rubbery impact modifier should typically have a glass transition temperature of less than 0° C. In certain aspects, the glass transition temperature (T_{g}) can be less than -5° C, -10° C, -15° C, with a T_{g} of less than -30° C typically providing better performance. Representative rubbery impact modifiers can include, for example, functionalized polyolefin ethylene-acrylate terpolymers, such as ethylene-acrylic esters-maleic anhydride (MAH) or glycidyl methacrylate (GMA). The functionalized rubbery polymer can optionally contain repeat units in its backbone which are derived from an anhydride group containing monomer, such as maleic anhydride. In another scenario, the functionalized rubbery polymer can contain anhydride moieties which are grafted onto the polymer in a post polymerization step.

### Properties and Articles

In certain aspects, the disclosed compositions may exhibit certain conductivity properties. A molded article or plaque comprising the composition may exhibit. The composition may have a surface resistivity. In yet further aspects, the present disclosure relates to a method of adjusting or controlling electrical resistivity of a polymer composition. The electrical resistivity of the polymer composition may be adjusted or controlled based on conductive filler loading and the amount of non-electrically conductive filler and their respective ratios. Without the non-electrically conductive filler, the surface resistivity of the filled polymer compositions decreased more rapidly, thereby demonstrating broadening of the percolation curve. Thus the amount of electrically conductive filler and non-electrically conductive filler may be selected in amounts to provide a higher electrical resistivity.

In various aspects, the present disclosure relates to articles comprising the compositions herein. The compositions can be molded into useful shaped articles by a variety of means such as injection molding, extrusion, rotational molding, blow molding and thermoforming to form articles. The compositions can be useful in the manufacture of articles requiring materials with good flow, good impact strength, and good dielectric strength. In various aspects, the compositions may be useful for as well as electrically conducting purposes.

The advantageous characteristics of the compositions disclosed herein can make them appropriate for an array of uses including, for example, electronic packaging, such as, a chip tray, carrier tape, among other materials.

### Methods

Aspects of the disclosure further relate to methods for making a composition including a thermoplastic polymer component. In many aspects, the compositions can be prepared according to a variety of methods. The compositions of the present disclosure can be blended, compounded, or otherwise combined with the aforementioned ingredients by a variety of methods involving intimate admixing of the materials with any additional additives desired in the formulation. Because of the availability of melt blending equipment in commercial polymer processing facilities, melt processing methods can be used. In various further aspects, the equipment used in such melt processing methods can include, but is not limited to, co-rotating and counter-rotating extruders, single screw extruders, co-kneaders, disc-pack processors and various other types of extrusion equipment. In a further aspect, the extruder is a twin-screw extruder. In various further aspects, the composition can be processed in an extruder at temperatures from about 180 °C to about 350 °C, particularly 250 °C to 300 °C.

Methods may further comprise processing the composition to provide a plaque of a desired thickness. Plaques can be extruded, injection molded, compression molded or injection-compression molded, and may have a thickness between about 0.5 mm and 6 mm. Other processes could also be applied to the thin thermoplastic film, including but not limited to, lamination, co-extrusion, thermo-forming or hot pressing. In such aspects, further layers of other materials (for example, other thermoplastic polymer layers, metallic layers, etc.) could be combined with the composition.

In yet further aspects, the present disclosure relates to a method of adjusting or controlling electrical resistivity of a polymer composition. The electrical resistivity of the polymer composition may be adjusted or controlled based on conductive filler loading and the amount of non-electrically conductive filler and their respective ratios. Without the non-electrically conductive filler, the surface resistivity of the filled polymer compositions decreased more rapidly, thereby demonstrating broadening of the percolation curve. The method may comprise forming a masterbatch composition by combining an electrically conductive filler and a polymer resin; forming a filler component by combining a non-electrically conductive filler with the masterbatch composition, wherein the non-electrically conductive filler is intrinsically hydrophobic or wherein the non-electrically conductive filler comprises a hydrophobic coating; and forming the polymer composition by combining the filler component with a polymer resin matrix. Forming the filler component may further comprise altering the electrical resistivity of the polymer composition by adjusting the amount of non-electrically conductive filler from about 0.1 wt% to about 5 wt%.

The method may comprise combining: an electrically conductive filler; and a first polymer resin to form a masterbatch. The masterbatch may be combined with a non-electrically conductive filler to form a filler component, wherein the non-electrically conductive filler is intrinsically hydrophobic or wherein the non-electrically conductive filler comprises a hydrophobic coating. The filler component and a polymer resin matrix (potentially, but not necessarily) the same as above, to form the polymer composition. The amount of electrically conductive filler component may be altered to adjust the electrical resistivity of the polymer composition across a broader percolation range.

As a further aspect, the electrically conductive filler may not be blended with a first polymer resin to form a masterbatch. As an alternative the electrically conductive filler may be added to the polymer resin matrix directly and further combined with a non-electrically conductive filler or a masterbatch comprising the non-electrically conductive filler. As a yet further aspect, the non-electrically conductive filler may be incorporated into a masterbatch and combined with electrically conductive filler and the polymer resin matrix.

Various combinations of elements of this disclosure are encompassed by this disclosure, for example, combinations of elements from dependent claims that depend upon the same independent claim.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a thermoplastic polymer component" includes mixtures of two or more thermoplastic polymer components. As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional processes" means that the additional processes can or cannot be included and that the description includes methods that both include and that do not include the additional processes.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation is 100.

Unless otherwise stated to the contrary herein, all test standards are the most recent standard in effect at the time of filing this application. Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Aspects of the Disclosure

The present disclosure pertains to and includes at least the following aspects.

Aspect 1. A composition comprising: from about 30 wt. % to 90 wt. % of polymer component; and from about 1 wt. % to 25 wt. % of a filler component, wherein the filler component comprises from about 5 wt% to about 20 wt% of an electrically conductive filler and from about 0.1 wt% to about 5 wt% of a non-electrically conductive filler based on the total weight of the composition, wherein the non-electrically conductive filler is intrinsically hydrophobic or wherein the non-electrically conductive filler comprises a hydrophobic coating; wherein the composition exhibits a surface resistivity of from about 1 × 10⁵ Ohm/square to about 1 × 10⁸ Ohm/square when tested in accordance with ASTM D257, wherein the combined weight percent value of all components does not exceed 100 wt. %, and all weight percent values are based on the total weight of the composition.

Aspect 2. The composition of aspect 1, wherein the polymer component comprises a polycarbonate, a polystyrene, or a combination thereof.

Aspect 3. The composition of aspect 1, wherein the polymer component comprises a bisphenol A polycarbonate polymer.

Aspect 4. The composition of any one of aspects 1-3, wherein the electrically conductive filler comprises conductive carbon black.

Aspect 5. The composition of any one of aspects 1-3, wherein the electrically conductive filler comprises a carbon black having an OAN of at least 140 ml/100 grams when tested in accordance with ASTM D2414.

Aspect 6. The composition of any one of aspects 1-5, wherein the filler component is present in an amount of 1 wt. % to 10 wt. %.

Aspect 7. The composition of any one of aspects 1-6, wherein the electrically conductive filler has a primary particle size of from 20 nm to 50 nm.

Aspect 8. The composition of any one of aspects 1-7, wherein the non-electrically conductive filler comprises calcium carbonate, zinc sulfide, barium sulfide, aluminum oxide, fumed silica, or a combination thereof.

Aspect 9. The composition of any one of aspects 1-7, wherein the non-electrically conductive filler comprises a fumed silica.

Aspect 10. The composition of any one of aspects 1-7, wherein the hydrophobic coating comprises a dimethyl silicone fluid.

Aspect 11. The composition of any one of aspects 1-7, wherein the non-electrically conductive filler comprises a fumed silica with a dimethyl silicone coating.

Aspect 12. The composition of any one of aspects 1-11, wherein the non-electrically conductive filler has a particle size of less than 50 nm.

Aspect 13. The composition of any one of aspects 1-11, wherein the non-electrically conductive filler has a particle size of less than 20 nm.

Aspect 14. The composition of any one of aspects 1-13, wherein the non-electrically conductive filler has a particle size that is at least 10% less than the particle size of the electrically conductive filler.

Aspect 15. The composition of any one of aspects 1-14, wherein the composition further comprises an additional additive comprising a pigment, a processing additive, a flow promoter, a de-molding agent, a thermal stabilizer, a light stabilizer, a UV-resistant additive, a UV absorbent additive, a flame anti-dripping agent, or a combination thereof.

Aspect 16. An article formed from the composition of any one of aspects 1-15.

Aspect 17. A method comprising: forming a masterbatch composition by combining an electrically conductive filler and a polymer resin; forming a filler component by combining a non-electrically conductive filler with the masterbatch composition, wherein the non-electrically conductive filler is intrinsically hydrophobic or wherein the non-electrically conductive filler comprises a hydrophobic coating; and forming the polymer composition by combining the filler component with a polymer resin matrix; and adjusting an amount of the electrically conductive filler to alter the electrical resistivity of the polymer composition.

Aspect 18. The method of aspect 17, wherein the forming the filler component further comprises altering the electrical resistivity of the polymer composition by adjusting the amount of non-electrically conductive filler from about 0.1 wt% to about 5 wt%.

Aspect 19. The method of any one of aspects 17-18, wherein the non-electrically conductive filler comprises calcium carbonate, zinc sulfide, barium sulfide, aluminum oxide, fumed silica, or a combination thereof.

Aspect 20. The method of any one of aspects 17-19, wherein the electrically conductive filler comprises conductive carbon black.

Aspect 21. A composition comprising: from about 30 wt. % to 90 wt. % of polymer component comprising polycarbonate, polystyrene, or a combination thereof; and from about 1 wt. % to 15 wt. % of a filler component, wherein the filler component comprises (i) from about 6 vol. % to about 13 vol. % of an electrically conductive carbon black, and (ii) from about 0.1 vol. % to about 3 vol. % of a non-electrically conductive filler based on the total volume of the composition, wherein the non-electrically conductive filler comprises a fumed silica having a hydrophobic coating; wherein the composition exhibits a surface resistivity of from about 1 × 10⁵ Ohm/square to about 1 × 10⁸ Ohm/square when tested in accordance with ASTM D257; wherein the combined weight percent value of all components does not exceed 100 wt. %, and all weight percent values are based on the total weight of the composition.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (for example, amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of mixing conditions, e.g., component concentrations, extruder design, feed rates, screw speeds, temperatures, pressures and other mixing ranges and conditions that can be used to optimize the product purity and yield obtained from the described process. Only reasonable and routine experimentation will be required to optimize such process conditions.

Various compositions samples were prepared from the materials presented in Table 1. Fumed silica was incorporated in an existing carbon black-filled polycarbonate (PC 105, ML 5721) compound through a masterbatch. With the increase of fumed silica (masterbatch) loading, the conductivity of compound decreased significantly slower. With a fixed silica loading, the percolation threshold was significantly extended. Compounding conditions are shown in Table 1.

**Table 1. Compounding conditions**

| | Output (kg/h) | Screw (rpm) | Vacuum (MPa) | Torque (%) | Barrel temperature (°C) | Die temperature (°C) |
|---|---|---|---|---|---|---|
| Setting condition | 25 | 300 | -0.08 | 60 | 285 | 290 |

Table 2 presents the injection molding conditions.

**Table 2. Injection molding parameters.**

| Molding parameters | unit | Value |
|---|---|---|
| Pre-drying time | Hour | 4 |
| Pre-drying temperature | °C | 80 |
| Hopper temperature | °C | 50 |
| Zone 1 temperature | °C | 280 |
| Zone 2 temperature | °C | 290 |
| Zone 3 temperature | °C | 290 |
| Nozzle temperature | °C | 280 |
| Mold temperature | °C | 100 |

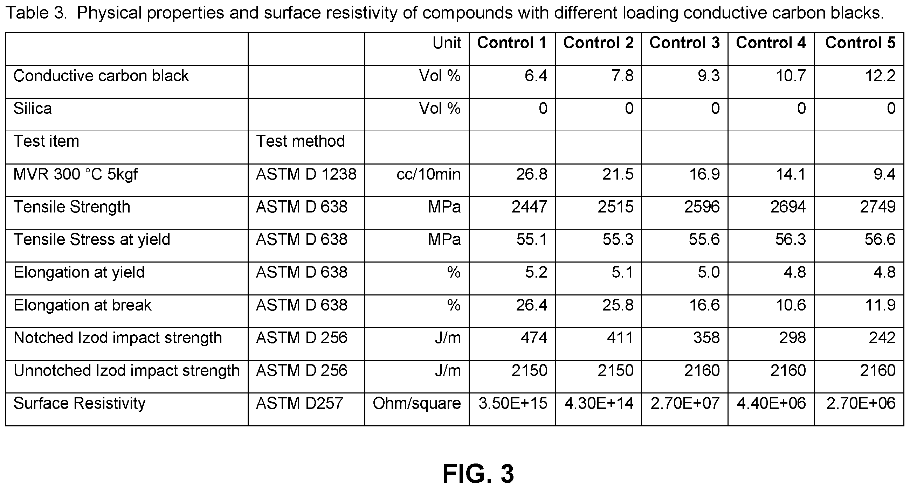

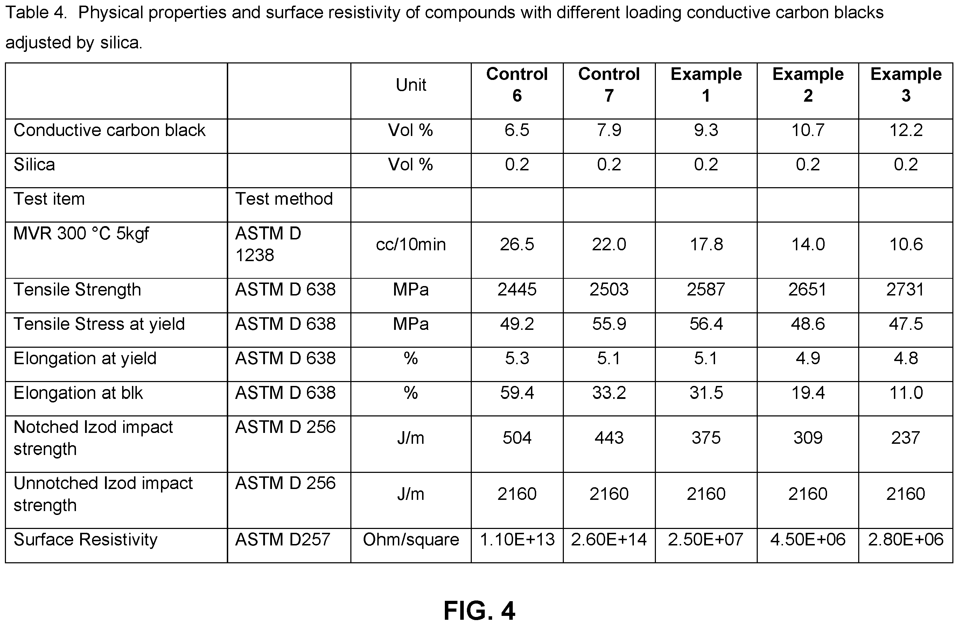

Samples were prepared and evaluated as shown in Table 3 (shown in FIG. 3) and Table 4 (shown in FIG. 4). Comparative samples are Controls 1 through 5 Density was measured using the immersion method for solid plastics part according to ASTM D792. Melt volume rate (MVR) and melt flow rate (MFR) was measured using granulate samples dried for 4 hours at 80°C, according to ASTM D1238. Impact tests were performed according to ASTM D256 and ASTM D4812. Surface resistivity of molded plaques and extruded films were tested using electrometer: Keithley Model 6517A following ASTM D257. For molded plaque, the dimensions were 68 mm × 68 mm × 3 mm, and for film, the thickness was about 70 micrometer µm, the film width was greater than 10 mm.

The incorporation of 0.2 vol% hydrophobic coated, fumed silica did not significantly affect the flowability, mechanical strength or impact strength. However, the addition of the silica at 0.2 vol% did reduce the effect on post processing to a minimum.

As the conductive carbon black loading was increased from 7.8 vol % to 10.7 vol%, the surface resistivity of 3.0 mm plaques (Controls 1-5) without silica decreased 1.3E+06 times, while those samples with silica decreased 2.9E+05 times. Meanwhile, the surface resistivity of 0.07mm films without silica decrease 3.8E+05 times, while these with silica decrease 1.7E+03 times.

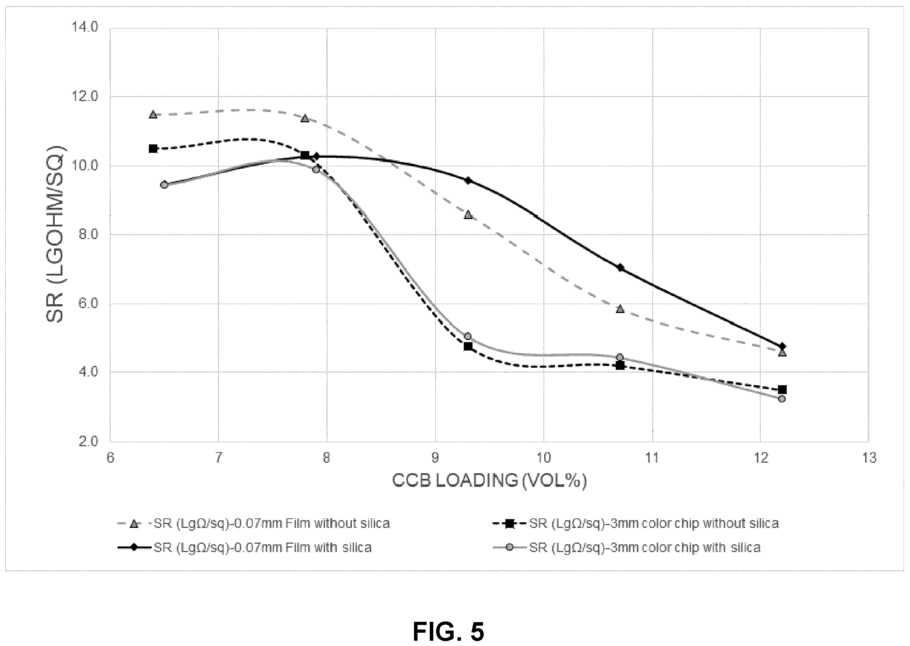

FIG. 5 presents the effects of silica on the surface resistivity of plaques and films with different conductive carbon black loadings. Thus, the changes in surface resistivity molded plaques/extruded films of conductive carbon black (CCB)-filled compounds were well reduced by the incorporation of silica. Higher silica loadings were expected to further reduce the surface resistivity variations.

Table 5 provides a comparison of the effects of silica on surface resistivity variations of plaques and films with different CCB loadings.

**Table 5. Surface resistivity variations for plaques and films with different carbon black loading**

| Surface resistivity variations with CCB loading varied from 7.8 vol% to 10.7 vol% | Without silica Control 2 vs Control 4 | With 0.2 vol% silica |
|---|---|---|
| | | Control 7 vs Example 2 |
| 0.07mm film SR comparison ratio (times) | 3.8 × 10⁵ | 1.7 × 10³ |
| 3.0mm plaque SR comparison ratio (times) | 1.3 × 10⁶ | 2.9 × 10⁵ |

The surface resistivity variations of carbon black filled compounds was well reduced by the incorporation of silica.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the disclosure should be determined with reference to the appended claims, along with the full scope of equivalents to which such claims are entitled.

It will be apparent to those skilled in the art that various modifications and variations can be made in the present disclosure without departing from the scope or spirit of the disclosure. Other embodiments of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A composition comprising:
a. from about 30 wt. % to 90 wt. % of polymer component; and
b. from about 1 wt. % to 25 wt. % of a filler component, wherein the filler component comprises
i. from about 5 wt% to about 20 wt% of an electrically conductive filler and
ii. from about 0.1 wt% to about 5 wt% of a non-electrically conductive filler based on the total weight of the composition, wherein the non-electrically conductive filler is intrinsically hydrophobic or wherein the non-electrically conductive filler comprises a hydrophobic coating;
wherein the composition exhibits a surface resistivity of from about 1 × 10⁵ Ohm/square to about 1 × 10⁸ Ohm/square when tested in accordance with ASTM D257,
wherein the combined weight percent value of all components does not exceed 100 wt. %, and all weight percent values are based on the total weight of the composition.

2. The composition of claim 1, wherein the polymer component comprises a polycarbonate, a polystyrene, or a combination thereof.

3. The composition of any one of claims 1-2, wherein the electrically conductive filler comprises conductive carbon black.

4. The composition of any one of claims 1-2, wherein the electrically conductive filler comprises a carbon black having an OAN of at least 140 ml/100 grams when tested in accordance with ASTM D2414.

5. The composition of any one of claims 1-4, wherein the filler component is present in an amount of 1 wt. % to 10 wt. %.

6. The composition of any one of claims 1-5, wherein the electrically conductive filler has a primary particle size of from 20 nm to 50 nm.

7. The composition of any one of claims 1-6, wherein the non-electrically conductive filler comprises calcium carbonate, zinc sulfide, barium sulfide, aluminum oxide, fumed silica, or a combination thereof.

8. The composition of any one of claims 1-7, wherein the non-electrically conductive filler comprises a fumed silica.

9. The composition of any one of claims 1-7, wherein the hydrophobic coating comprises a dimethyl silicone fluid.

10. The composition of any one of claims 1-9, wherein the non-electrically conductive filler has a particle size of less than 50 nm.

11. The composition of any one of claims 1-10, wherein the non-electrically conductive filler has a particle size that is at least 10% less than the particle size of the electrically conductive filler.

12. The composition of any one of claims 1-11, wherein the composition further comprises an additional additive comprising a pigment, a processing additive, a flow promoter, a de-molding agent, a thermal stabilizer, a light stabilizer, a UV-resistant additive, a UV absorbent additive, a flame anti-dripping agent, or a combination thereof.

13. An article formed from the composition of any one of claims 1-12.

14. A method comprising:
a. forming a masterbatch composition by combining
i. an electrically conductive filler and a polymer resin;
b. forming a filler component by combining
a non-electrically conductive filler with the masterbatch composition, wherein the non-electrically conductive filler is intrinsically hydrophobic or wherein the non-electrically conductive filler comprises a hydrophobic coating; and
c. forming the polymer composition by combining the filler component with a polymer resin matrix; and
d. adjusting an amount of the electrically conductive filler to alter the electrical resistivity of the polymer composition.

15. The method of claim 14, wherein the forming the filler component further comprises altering the electrical resistivity of the polymer composition by adjusting the amount of non-electrically conductive filler from about 0.1 wt% to about 5 wt%.
